# DEMANDE DE BREVET EUROPEEN

(11) **EP 0 949 100 A1**
(43) Date de publication de la demande: **13.10.1999**
(21) Numéro de dépôt: 99400866.2
(22) Date de dépôt: 08.04.1999
(51) Int. Cl.: B60J 1/16, E05D 15/10

(54) **Dispositif de montage à rotation d'une vitre coulissante, en particulier sur une porte de véhicule automobile**

(30) Priorité: 08.04.1998 FR 9804378
(71) Demandeur: RENAULT, 92109 Boulogne-Billancourt (FR)
(72) Inventeur: Urset, Charles, 95610 Eragny sur Oise (FR); Walho, Eddy, 78330 Fontenay le Fleury (FR); Freytrich, Jean-Pierre, 92130 Issy les Moulineaux (FR); Le Leizour, Alban, 78580 Maule (FR)

(57) **Abrégé**

Dispositif de montage d'une vitre coulissante sur un châssis comprenant une glissière longitudinale (11) prévue sur le châssis (10) et présentant une paroi intérieure cylindrique ouverte par une fente longitudinale (12) ; une coulisse longitudinale (15) disposée dans ladite glissière (11) de façon à pouvoir pivoter selon son axe et présentant un canal longitudinal (16) à paroi intérieure cylindrique ouverte par une fente longitudinale (17) située dans la zone de la fente de la glissière ; un coulisseau longitudinal (20) disposé dans ledit canal (16) de façon à pouvoir pivoter selon son axe et présentant une languette longitudinale (21) sur laquelle est fixé un bord longitudinal (5b) de ladite vitre (5) ; des moyens de manoeuvre (37) de ladite coulisse (15) et des moyens de maintien latéral (6) d'un autre bord (5a) de ladite vitre (5), prévus sur le châssis (2), de telle sorte qu'une rotation de ladite coulisse permet d'amener la vitre d'une position fermée à une position écartée par déplacement latéral dudit coulisseau par rapport au châssis, position écartée dans laquelle la vitre peut coulisser par déplacement longitudinal de ladite coulisse et/ou dudit coulisseau par rapport au châssis, et réciproquement pour amener la vitre de sa position écartée à sa position fermée.

## Description

La présente invention concerne un dispositif de montage d'une vitre coulissante sur un châssis en particulier sur une porte d'un véhicule automobile.

On connait actuellement des systèmes de montage de vitres coulissantes de portes de véhicules automobiles dans lesquelles les bords supérieurs et inférieurs des vitres sont disposés dans des gorges de façon à pouvoir coulisser longitudinalement, une porte comprenant en général une vitre coulissante et une autre vitre soit fixe soit également coulissante, décalées transversalement l'une par rapport à l'autre.

Compte tenu en particulier de ce décalage, il peut se produire des bruits ou sifflements dûs à l'air et, en outre, de tels systèmes n'apparaissent pas très esthétiques.

Le but de la présente invention est de proposer un dispositif de montage d'une vitre coulissante de structure tout à fait différente de celles qui sont connues.

Selon l'invention, le dispositif de montage proposé, d'une vitre coulissante sur un châssis, comprend une glissière longitudinale prévue sur le châssis et présentant une paroi intérieure cylindrique ouverte par une fente longitudinale ; une coulisse longitudinale disposée dans ladite glissière de façon à pouvoir pivoter selon son axe et présentant un canal longitudinal à paroi intérieure cylindrique ouverte par une fente longitudinale située dans la zone de la fente de la glissière; un coulisseau longitudinal disposé dans ledit canal de façon à pouvoir pivoter selon son axe et présentant une languette longitudinale sur laquelle est fixé un bord longitudinal de ladite vitre; des moyens de manoeuvre de ladite coulisse; des moyens de maintien latéral d'un autre bord de ladite vitre, prévus sur le châssis.

Ainsi, une rotation de ladite coulisse permet d'amener la vitre d'une position fermée à une position écartée par déplacement latéral dudit coulisseau par rapport au châssis, position écartée dans laquelle la vitre peut coulisser par déplacement longitudinal de ladite coulisse et/ou dudit coulisseau par rapport au châssis, et réciproquement pour amener la vitre de sa position écartée à sa position fermée.

Selon l'invention, la vitre occupe de préférence, à sa position fermée et à sa position écartée, deux positions sensiblement parallèles.

Selon l'invention, ladite coulisse et ledit coulisseau comprennent de préférence des butées réciproques limitant leur rotation l'un par rapport à l'autre, respectivement à ladite position fermée et à ladite position écartée de la vitre.

Selon l'invention, ladite glissière et ladite coulisse comprennent de préférence des butées réciproques limitant la rotation de ladite coulisse à ladite position écartée.

Selon l'invention, ladite coulisse est de préférence disposée de telle sorte que la vitre se rapproche du plan médian de la glissière qui lui est perpendiculaire lorsqu'elle passe de sa position fermée à sa position écartée et qu'elle s'en éloigne lorsqu'elle passe de sa position écartée à sa position fermée.

Selon l'invention, lesdits moyens de maintien sont de préférence disposés à l'opposé dudit coulisseau et comprennent de préférence une rainure longitudinale dont les parois opposées servent d'appui pour la vitre respectivement à sa position fermée et à sa position écartée et dont le fond est incliné de manière à guider la vitre vers sa position fermée, l'écartement entre lesdites parois de ladite rainure étant de préférence tel qu'à sa position fermée et à sa position écartée, la vitre occupe deux positions sensiblement parallèles.

Selon l'invention, ledit châssis peut avantageusement porter une vitre fixe dans l'alignement de laquelle s'étend ladite vitre coulissante en position fermée, ledit châssis comprenant une rainure longitudinale et ladite glissière s'étendant de façon telle que la vitre peut, à sa position écartée, coulisser en passant devant la vitre fixe.

Selon l'invention, ladite coulisse est de préférence munie d'une poignée de manoeuvre.

La présente invention sera mieux comprise à l'étude d'un dispositif de montage d'une vitre coulissante sur une porte de véhicule automobile, décrit à titre d'exemple non limitatif et illustré par le dessin sur lequel :
- la figure 1 représente une vue de la façe intérieure d'une porte de véhicule automobile, comprenant une vitre fixe et une vitre coulissante ;
- la figure 2 représente une coupe verticale selon II de la porte de la figure 1, dans la zone de la vitre coulissante, cette dernière étant en position fermée ;
- la figure 3 représente une coupe verticale selon III de la porte de la figure 1, dans la zone de la partie inférieure de la vitre fixe, la vitre coulissante étant en position écartée ;
- la figure 4 représente une coupe verticale selon IV de la porte de la figure 1 dans la zone de la partie supérieure de la vitre coulisssante, cette dernière étant représentée en traits forts dans sa position fermée et en traits mixtes dans sa position écartée ;
- la figure 5 représente une coupe horizontale selon V de la porte de la figure 1 dans la zone médiane de la partie arrière de la vitre coulissante, cette dernière étant représentée en traits forts en position fermée et en traits mixtes en position écartée ;
- et la figure 6 représente une coupe verticale selon VI de la porte de la figure 1 dans la zone de la partie supérieure de la vitre fixe, la vitre coulissante étant en position écartée.

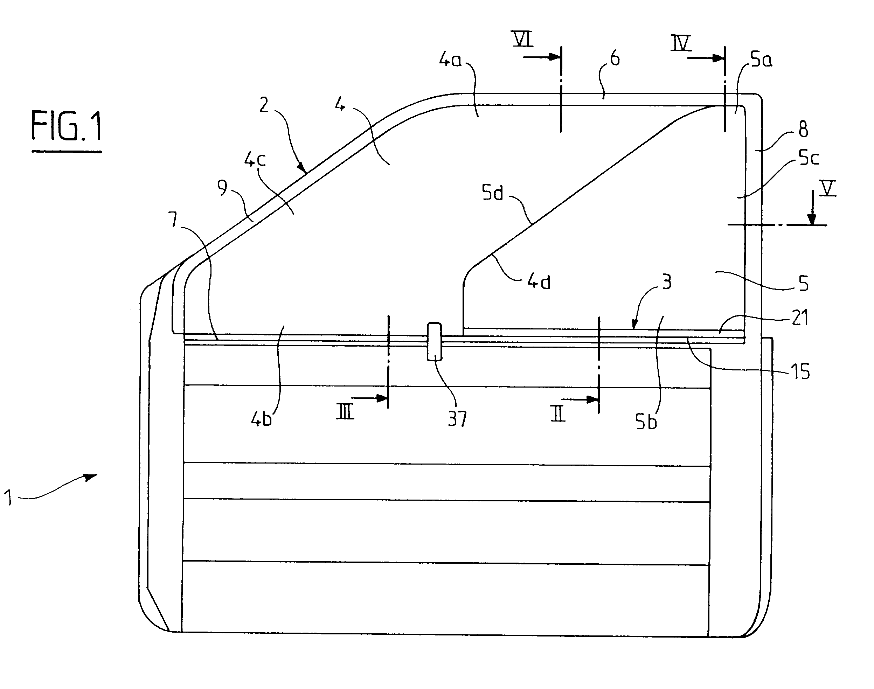

En se reportant à la figure 1, on voit qu'on a représenté une porte 1 d'un véhicule automobile qui comprend, dans sa structure, un cadre supérieur 2 destiné à recevoir un système de montage 3 d'une vitre avant fixe 4 et d'une vitre arrière coulissante 5.

Dans l'exemple, le cadre 2 se présente sensiblement sous la forme d'un trapèze qui présente un côté haut 6 et un côté bas 7 horizontaux, un côté arrière 8 vertical et un côté avant 9 incliné vers l'avant. La vitre fixe 4 couvre une partie avant de l'espace déterminé par le cadre 2 et la vitre coulissante 5 couvre, en position fermée, une partie arrière complémentaire de l'espace intérieur du cadre 2.

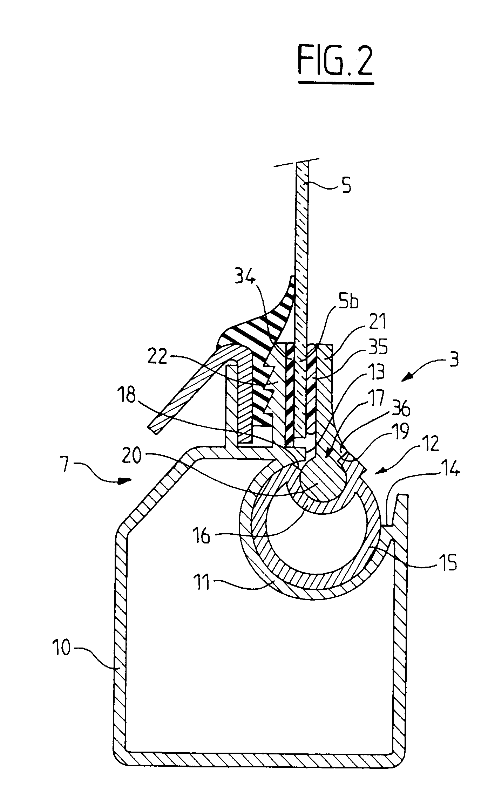

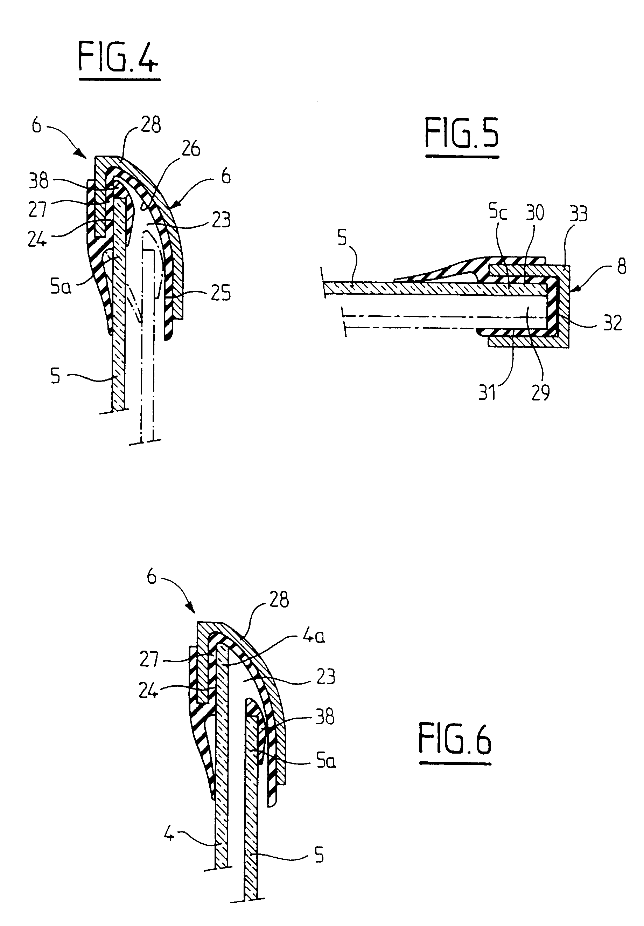

Comme on peut le voir sur les figures 2 et 6, le côté inférieur 7 du cadre 2 comprend un profilé longitudinal 10, de section générale carrée, qui présente une forme cylindrique en saillie intérieurement, déterminant une glissière cylindrique longitudinale 11. Cette dernière couvre sensiblement les trois quarts d'un cercle et est ouverte sensiblement à 45° dans le coin intérieur et supérieur du profilé 10, déterminant ainsi une fente longitudinale 12 délimitée par un bord supérieur 13 et un bord inférieur 14.

Le dispositif de montage 3 comprend en outre une coulisse longitudinale 15 de section générale cylindrique, disposée à l'intérieur de la glissière cylindrique 11. Cette coulisse 15 présente une forme en saillie intérieurement, qui détermine un canal longitudinal cylindrique qui s'étend sur environ les trois quarts d'un cercle et qui présente une fente longitudinale 17 déterminée entre deux bords 18 et 19, la fente 17 s'étendant dans la zone de la fente 12 de la glissière 11.

Le dispositif de montage 3 comprend en outre un coulisseau longitudinal 20 de forme cylindrique qui est disposé à l'intérieur du canal 16 de la coulisse 15. Ce coulisseau présente une languette longitudinale 20 qui s'étend vers le haut au travers de la fente 17 de la coulisse 15.

La face supérieure du profilé 10 du cadre 2 présente une languette longitudinale 22 qui s'étend vers le haut et qui est disposée à distance du bord longitudinal 13 de la fente longitudinale 12 du profilé 10.

Comme on peut le voir sur les figures 4 et 6, le côté supérieur 6 du cadre 2 comprend une rainure longitudinale 23 ouverte vers le bas qui présente une surface verticale d'appui extérieur 24 et une surface verticale d'appui intérieur 25, opposées et distantes, ainsi qu'un fond incliné 26 qui va en montant depuis la base de la surface d'appui intérieur 25 jusqu'à la base de la surface d'appui extérieur 24.

La rainure longitudinale 23 est déterminée par l'intérieur d'un joint 27 de section générale en forme de U, qui est disposé à l'intérieur d'un profilé horizontal 28 de forme complémentaire déterminant le côté 6 du cadre 2.

Comme on peut le voir sur la figure 5, le côté vertical arrière 8 du cadre 2 comprend une rainure 29 ouverte vers l'avant, qui s'étend dans le prolongement de la rainure 23 du côté 6 et qui présente une surface d'appui extérieur 30 et une surface d'appui 31, parallèles et distantes. Comme précédemment, cette rainure 29 est formée dans un joint 32 de section en forme de U, qui prolonge le joint 27 et qui est disposé à l'intérieur d'un profilé vertical 33 de section en forme de U qui prolonge le profilé 28.

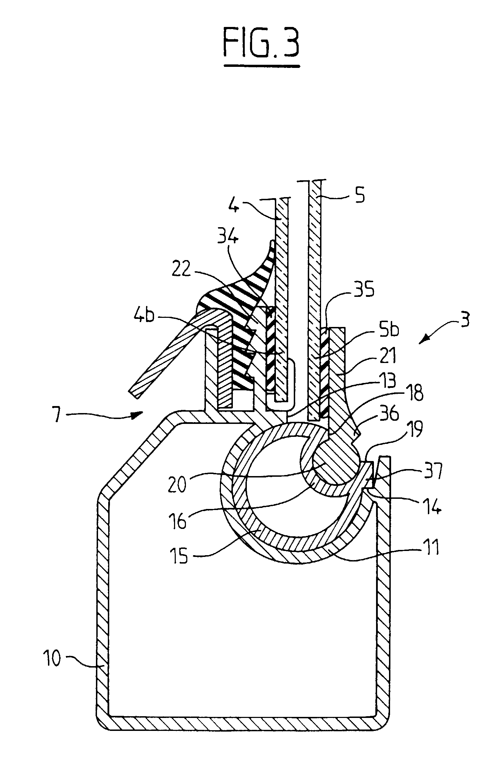

Comme on peut le voir sur les figures 3 et 6, le bord supérieur longitudinal 4a de la vitre fixe 4 est engagé à fond dans la rainure 23 du côté supérieur 6 du cadre 2 de telle sorte que sa face extérieure est en appui contre la surface d'appui extérieur 24 de cette rainure 23.

La face extérieure du bord longitudinal inférieur 4b de la vitre 4 est fixé contre la face intérieure de la languette longitudinale 22 du profilé longitudinal inférieur 10 du cadre, par exemple par collage par l'intermédiaire d'un joint 34, la face intérieure de la vitre 4 arrivant sensiblement à fleur du bord latéral supérieur 13 de la fente 12 du profilé 10. Le bord avant 4c de la vitre fixe 4 est engagé dans une rainure, non représentée, du côté avant 9 du cadre 2.

Comme on peut le voir sur les figures 2 et 4, le bord longitudinal supérieur 5a de la vitre coulissante 5 est engagé dans la rainure longitudinale 23 du côté supérieur 6 du cadre 2, tandis que la face extérieure du bord inférieur 5b de la vitre coulissante 5 est fixée contre la face extérieure de la languette longitudinale 21 du coulisseau 20, par exemple par collage par l'intermédiaire d'un joint 35.

Comme on peut le voir sur les figures 2, 4 et 5, lorsque la vitre coulissante 5 est en position fermée, son bord supérieur 5a est engagé à fond dans la rainure 23 du côté longitudinal supérieur 6 du cadre 2 et le système de montage 3 est à sa position relevée.

Dans cette position fermée, le pourtour extérieur de la vitre 5 est en appui contre la surface d'appui extérieur 24 du côté supérieur 6 du cadre 2, contre la surface d'appui 30 du côté vertical arrière 8 du cadre 2 et contre le joint longitudinal 34 porté par la languette verticale 22 du profilé 10 constituant le côté inférieur 7 du cadre 2, de telle sorte que la vitre coulissante 5 s'étend dans l'alignement de la vitre fixe 4, le bord avant 5d de la vitre coulissante 5 s'étendant de façon adjacente au bord arrière 4d de la vitre fixe 4.

De préférence, le bord arrière 4d de la vitre fixe 4 porte un joint plat non représenté, contre lequel la face extérieure du bord avant 5d de la vitre coulissante 5 vient en appui.

De plus, dans sa position relevée précitée, le dispositif de montage 3 est disposé de telle sorte que le coulisseau longitudinal 20 est dans une position haute dans laquelle l'axe longitudinal du coulisseau 20, correspondant à l'axe longitudinal du canal 16 de la coulisse 15, et l'axe longitudinal de la coulisse 15, correspondant à l'axe longitudinal de la glissière 11, s'étendent dans un plan vertical.

Dans la position relevée précitée, le pied de la languette longitudinale 21 du coulisseau 20 présente un épaulement longitudinal 36 qui est en butée contre le bord intérieur 19 de la fente longitudinale 17 de la coulisse 15.

Comme on peut le voir très schématiquement sur la figure 1, le coulisseau longitudinal 20 et sa languette longitudinale 21 s'étendent tout le long du bord inférieur 5b de la vitre coulissante 5, à l'exception de sa partie arrière engagée dans le côté 8 du cadre 2. La coulisse longitudinale 15 s'étend de façon correspondante et présente un court prolongement vers l'avant qui porte une poignée 37 qui s'étend au travers de la fente longitudinale 12 du profilé 10, tandis que la glissière longitudinale 11 du profilé 10 s'étend sur toute la longueur du côté longitudinal inférieur 7 du cadre 2.

Dans la position relevée précitée du dispositif de montage 3, cette poignée est en position relevée.

Lorsqu'on agit sur la poignée 37 de manière à la faire passer de sa position relevée à une position abaissée, on fait passer la vitre 5 de sa position fermée décrite précédemment à une position écartée et le dispositif de montage 3 de sa position relevée à une position abaissée, visibles principalement sur les figures 3, 4, 5 et 6.

Ce mouvement d'abaissement de la poignée 37 provoque la rotation selon leur axe longitudinal de la coulisse 15 dans la glissière 11 et, en sens contraire, la rotation selon leur axe longitudinal du coulisseau 20 dans le canal 16 de la coulisse 15, en provoquant l'écartement latéral de la vitre coulissante 5 vers l'intérieur de la porte 1.

Ce mouvement d'écartement est facilité par le fait que le bord longitudinal 18 de la fente 17 du canal longitudinal 16 de la coulisse 15 vient en appui contre la face extérieure de la languette 21 de la coulisse 20.

Dans cette position écartée visible en traits forts sur les figures 3 et 6 et en traits tirés sur les figures 4 et 5, l'axe longitudinal du coulisseau 20 et l'axe longitudinal de la glissière 11 s'étendent dans un plan sensiblement à 45°, la coulisse 15 présentant un épaulement 37 qui détermine son bord longitudinal 19 et qui, à l'opposé, vient en appui contre le bord longitudinal 14 de la glissière longitudinale 11.

Dans sa position écartée, la vitre coulissante 5 se trouve dans une position parallèle à celle qu'elle occupait dans sa position fermée précitée, telle que son pourtour est en appui contre la surface d'appui intérieur 25 du côté longitudinal supérieur 6 du cadre 2 et en appui contre la surface d'appui intérieur 31 du côté vertical arrière 8 du cadre 2, la vitre 5 ayant subie, par rotation du dispositif de montage 3, un mouvement de descente de telle sorte que son bord supérieur 5a est écarté du fond 25 de la rainure 23 du côté supérieur 6 du cadre 2.

A partir de sa position écartée décrite ci-dessus et à l'aide de la poignée de manoeuvre 37 en position abaissée, on peut déplacer longitudinalement la vitre coulissante 6 devant la face intérieure de la vitre fixe 4 et à distance de cette dernière de manière à libérer un passage au travers du cadre 2 de la porte 1. Ce faisant, la coulisse 15 glisse longitudinalement dans la glissière longitudinale 11, en entrainant avec elle le coulisseau 20 qui porte la vitre coulissante 5.

Bien entendu, le coulisseau 20 est solidaire dans le sens longitudinal de la coulisse 15 par tout moyen connu, par exemple grâce à des bouchons formant butées disposés à l'intérieur des extrémités du canal longitudinal 16 de la coulisse 15.

Pour ramener la vitre coulissante 5 à sa position fermée, on procède de manière inverse.

Ainsi, à l'aide de la poignée de manoeuvre 37 en position abaissée, on ramène vers l'arrière la vitre coulissante 5 en butée dans le fond de la rainure 29 du côté vertical arrière 8 du cadre 2 en faisant coulisser vers l'arrière la coulisse 15 dans la glissière 11.

Puis, on relève la poignée de manoeuvre 15 de manière à faire passer le dispositif de montage 3 de sa position abaissée à sa position relevée décrites précédemment. Ce faisant, la vitre coulissante 5 passe de sa position écartée à sa position fermée décrites précédemment, la vitre coulissante 5 se déplaçant parallèlement à elle-même vers l'extérieur et vers le haut. Ce mouvement est facilité par le fait que le bord supérieur 5a de la vitre coulissante 5 prend appui contre le fond incliné 25 de la rainure longitudinale 23 du côté supérieur 6 du cadre 2.

Pour faciliter ce glissement, le bord supérieur 5a de la vitre coulisante 5 porte un tampon longitudinal 38.

La présente invention ne se limite pas à l'exemple ci-dessus décrit. Bien des variantes de réalisation sont possibles sans sortir du cadre défini par les revendications annexées.

## Revendications

1. Dispositif de montage d'une vitre coulissante sur un châssis, caractérisé par le fait qu'il comprend une glissière longitudinale (11) prévue sur le châssis (2) et présentant une paroi intérieure cylindrique ouverte par une fente longitudinale (12) ; une coulisse longitudinale (15) disposée dans ladite glissière (11) de façon à pouvoir pivoter selon son axe et présentant un canal longitudinal (16) à paroi intérieure cylindrique ouverte par une fente longitudinale (17) située dans la zone de la fente de la glissière ; un coulisseau longitudinal (20) disposé dans ledit canal (16) de façon à pouvoir pivoter selon son axe et présentant une languette longitudinale (21) sur laquelle est fixé un bord longitudinal (5b) de ladite vitre (5) ; des moyens de manoeuvre (37) de ladite coulisse (15) et des moyens de maintien latéral (6) d'un autre bord (5a) de ladite vitre (5), prévus sur le châssis (2) de telle sorte qu'une rotation de ladite coulisse permet d'amener la vitre d'une position fermée à une position écartée par déplacement latéral dudit coulisseau par rapport au châssis, position écartée dans laquelle la vitre peut coulisser par déplacement longitudinal de ladite coulisse et/ou dudit coulisseau par rapport au châssis, et réciproquement pour amener la vitre de sa position écartée à sa position fermée.

2. Dispositif selon la revendication 1, caractérisé par le fait qu'à sa position fermée et à sa position écartée, la vitre (5) occupe deux positions sensiblement parallèles.

3. Dispositif selon l'une des revendications 1 et 2, caractérisé par le fait que ladite coulisse (15) et ledit coulisseau (20) comprennent des butées réciproques (16, 18, 19, 36) limitant leur rotation l'un par rapport à l'autre, respectivement à ladite position fermée et à ladite podition écartée de la vitre.

4. Dispositif selon l'une quelconque des revendications précédentes, caractérisé par le fait que ladite glissière (11) et ladite coulisse (15) comprennent des butées réciproques (14, 37) limitant la rotation de ladite coulisse à ladite position écartée.

5. Dispositif selon l'une quelconque des revendications précédentes, caractérisé par le fait que ladite coulisse (15) est disposée de telle sorte que la vitre (5) se rapproche du plan médian de la glissière (11) qui lui est perpendiculaire lorsqu'elle passe de sa position fermée à sa position écartée et qu'elle s'en éloigne lorsqu'elle passe de sa position écartée à sa position fermée.

6. Dispositif selon l'une quelconque des revendications précédentes, caractérisé par le fait que lesdits moyens de maintien sont disposés à l'opposé dudit coulisseau (20) et comprennent une rainure longitudinale (23) dont les parois opposées (24, 25) servent d'appui pour la vitre respectivement à sa position fermée et à sa position écartée et dont le fond est incliné de manière à guider la vitre vers sa position fermée, l'écartement entre lesdites parois de ladite rainure étant tel qu'à sa position fermée et à sa position écartée, la vitre occupe deux positions sensiblement parallèles.

7. Dispositif selon l'une quelconque des revendications précédentes, caractérisé par le fait que ledit châssis (2) porte une vitre fixe (4) dans l'alignement de laquelle s'étend ladite vitre coulissante (5) en position fermée, ledit châssis (2) comprenant une rainure longitudinale (23) et ladite glissière (11) s'étendant de façon telle que la vitre coulissante (5) peut, à sa position écartée, coulisser en passant devant la vitre fixe (4).

8. Dispositif selon l'une quelconque des revendications précédentes, caractérisé par le fait que ladite coulisse (5) est munie d'une poignée de manoeuvre (37).
